# EUROPÄISCHE PATENTSCHRIFT

(11) **EP 2 731 164 B1**
(45) Veröffentlichungstag und Bekanntmachung des Hinweises auf die Patenterteilung: **28.06.2017**
(21) Anmeldenummer: 12192300.7
(22) Anmeldetag: 12.11.2012
(51) Int. Cl.: H01M 2/10, H01M 10/60

(54) **Batteriesystem**
Battery system
Système de batterie

(43) Veröffentlichungstag der Anmeldung: 14.05.2014
(73) Patentinhaber: Samsung SDI Co., Ltd., Yongin-si, Gyeonggi-do (KR)
(72) Erfinder: Dämon, Peter, 8301 Laßnitzhöhe (AT); Eichberger, Georg, 8044 Graz (AT)
(74) Vertreter: Gulde & Partner

(56) Entgegenhaltungen:
- WO-A2-2011/082226
- DE-A1-102009 052 508
- DE-A1-102010 022 327

## Beschreibung

### Gebiet der Erfindung

Die vorliegende Erfindung betrifft ein Batteriesystem umfassend zumindest eine Batteriezelle, ein Absorptionselement, und ein Temperiersystem mit einem flüssigen Temperiermittel zur Kühlung und/oder Heizung der Batteriezellen in einem Batteriegehäuse, sowie ein Kraftfahrzeug umfassend ein Batteriesystem.

### Stand der Technik

Batteriesysteme mit mehreren Batteriezellen werden insbesondere als Energiespeicher für den Antrieb von Elektro- und Hybridfahrzeugen eingesetzt. Um eine optimale Funktion des Energiespeichers zu gewährleisten ist es notwendig die Temperatur der Batteriezellen in einem gewünschten Betriebsbereich zu halten. Um Überschreitungen und/oder Unterschreitungen der Betriebstemperatur zu verhindern werden aktive oder passive Temperiersysteme eingesetzt. Besonders bewährt hat sich der Einsatz von flüssigem Temperiermittel mit einer hohen Wärmekapazität das gut wärmeleitend, in einem Wärmetauscher, an den Batteriezellen entlanggeführt wird.

Problematisch ist dabei jedoch, dass es, beispielsweise bei einem Unfall eines derart ausgestatteten Fahrzeuges, zu Leckagen und dadurch zum Austreten des Temperiermittels aus dem Kühlkörper kommen kann. Das Temperiermittel kann dann in direkten Kontakt mit den Batteriezellen gelangen und durch seine Leitfähigkeit beispielsweise einen Kurzschluss auslösen.

Ein Batteriesystem entsprechend dem Oberbegriff von Anspruch 1 ist aus der DE 10 2010 010 844 A1 bekannt. Das darin offenbarte Batteriesystem beschreibt ein Speichermodul zur Spannungsversorgung, insbesondere eines Kraftfahrzeugs mit einer Anzahl an Speicherzellen, die jeweils ein erstes und ein zweites Anschlussterminal unterschiedlicher Polarität und ein Ventil aufweisen. Über den Anschlussterminals sind die Speicherzellen elektrisch zu dem Speichermodul verschaltet. Über ein jeweiliges Ventil kann ein in einer Speicherzelle vorhandener Innendruck abgebaut werden und Elektrolyt aus der Speicherzelle austreten.

Die Speicherzellen des beschriebenen Speichermoduls weisen ein Ventil in Gestalt einer Sollbruchstelle auf. Diese Sollbruchstelle ermöglicht den Austritt von überflüssigem Elektrolyt bei Alterung der Speicherzelle aus dem Inneren der Speicherzelle. Da der in Speicherzellen verwendete Elektrolyt meist elektrisch leitend ist, kann dies zu Kurzschlüssen innerhalb des Speichermoduls führen und die Funktion des gesamten Speichermoduls kann nicht mehr gewährleistet werden.

Die im Stand der Technik beschriebenen Einrichtungen sind nicht dazu geeignet große Mengen an Temperiermittel, die im Schadensfall aus einem Temperiersystem im Inneren eines geschlossenen Batteriegehäuses austreten, zu binden und so Beschädigungen an Batteriesystemen und -zellen wirksam zu verhindern.

Es ist daher Aufgabe der Erfindung verbesserte Batteriesysteme mit erhöhter Betriebssicherheit bereitzustellen und diese insbesondere so auszubilden, dass eine einfache, kostengünstige und wenig fehleranfällige Herstellung der Batteriesysteme möglich ist.

Es ist auch Aufgabe der Erfindung Kraftfahrzeuge mit verbesserten Batteriesystemen zu ermöglichen.

### Zusammenfassung der Erfindung

Die Lösung der Aufgabe erfolgt durch ein Batteriesystem umfassend Batteriezellen, zumindest ein Absorptionselement, und ein Temperiersystem mit einem flüssigen Temperiermittel zur Kühlung und/oder Beheizung der Batteriezellen in einem Batteriegehäuse, wobei das Absorptionselement zur Aufnahme des flüssigen Temperiermittels zwischen den Batteriezellen und dem Batteriegehäuse angeordnet ist, wobei das Absorptionselement ein Vlies ist, wobei das Vlies eine durchschnittliche flächenbezogene Masse von 250 bis 700 g/m² aufweist und Fasern von zumindest zwei unterschiedlichen Fasertypen umfasst, wobei zumindest einer der Fasertypen eine Stützfaser ist und zumindest ein weiterer der Fasertypen eine Absorptionsfaser ist, und im Absorptionselement der Gewichtsanteil der Stützfaser zwischen 1% und 40% und der Gewichtsanteil der Absorptionsfaser zwischen 60% und 99% liegt. Es resultiert so ein Absorptionselement das einerseits durch die Wirkung der Stützfaser besonders elastisch ist und andererseits durch die Wirkung der Absorptionsfaser eine hohe Saugfähigkeit aufweist.

Damit das Batteriesystem, eines Fahrzeugs bei einem Unfall nicht geschädigt wird, ist ein Batteriegehäuse entsprechend steif und stabil auszuführen. Um dies zu erreichen weist das Batteriegehäuse häufig Sicken, Rippen und andere Versteifungseinrichtungen auf. Austretendes flüssiges Temperiermittel kann bei geeigneter Lage in durch die Versteifungsgeometrie geformte Zwischenräume und Vertiefungen gelangen. Herkömmlich aufgebaute Vliese sind aufgrund ihres kompakten Aufbaus nicht in der Lage, diese Zwischenräume und Vertiefungen so aufzufüllen, dass ausgetretenes flüssiges Temperiermittel sicher absorbiert werden kann. Verbleibt ausgetretenes flüssiges Temperiermittel in den genannten Zwischenräumen und Vertiefungen, kann es bei entsprechender Lage des Fahrzeugs zu unerwünschten Stromflüssen innerhalb des Batteriesystems kommen. Elektrochemische Reaktionen (beispielsweise die Spaltung von Wasser unter Freisetzung von Wasserstoff) oder auch Kurzschlussströme mit lokaler Überhitzung sind mögliche Folgen.

Die Lösung der Aufgabe erfolgt außerdem durch ein Batteriesystem für ein Kraftfahrzeug, umfassend zumindest ein Batteriemodul und zumindest ein damit wirkverbundenes Batteriesystem. Unter anderem wird das Crash-Verhalten des Kraftfahrzeugs verbessert die Gefahr von Folgeschäden (z.B. Kurzschluss, Brand) eines Zusammenstoßes wird vermindert. Weiterbildungen der Erfindung sind in den abhängigen Ansprüchen, der Beschreibung sowie den beigefügten Zeichnungen angegeben.

Bevorzugt weist das Absorptionselement eine durchschnittliche flächenbezogene Masse von 300 bis 450 g/m2 auf. Besonders bevorzugt liegen der Gewichtsanteil der Stützfaser zwischen 2% und 30% und der Gewichtsanteil der Absorptionsfaser zwischen 70% und 98%. Durch die Verwendung eines geeigneten elastischen Materials für die Stützfaser kann der Gewichtsanteil der Stützfaser gering gehalten werden. Ein hoher Gewichtsanteil an Absorptionsfasern bewirkt eine hohe Absorptionskapazität des erfindungsgemäßen Vlieses.

Eine bevorzugte Ausführungsform der Erfindung ist dadurch gekennzeichnet, dass das Absorptionselement in einem unbelasteten Zustand eine Bauhöhe von 3 mm bis 40 mm aufweist. Als unbelasteter Zustand wird hier ein Zustand bezeichnet, in dem das Absorptionselement weder mechanisch verpresst noch mit flüssigem Temperiermittel beladen ist. Die optimale Bauhöhe im unbelasteten Zustand ist im Zusammenhang mit einem gewünschten Grad der Verpressung (siehe unten) des Absorptionselementes zu betrachten.

Eine besonders bevorzugte Ausführungsform der Erfindung ist dadurch gekennzeichnet, dass das Absorptionselement in einem unbelasteten Zustand eine Bauhöhe von 3 mm bis 10 mm aufweist. Durch eine besonders platzsparende Bauweise von Batteriesystemen ergeben sich enge Einbauräume, wobei sich, wiederum im Zusammenhang mit einem gewünschten Grad der Verpressung (siehe unten) des Absorptionselementes, geringe Bauhöhen als vorteilhaft erweisen.

Eine weitere bevorzugte Ausführungsform der Erfindung ist dadurch gekennzeichnet, dass das Absorptionselement abschnittsweise eine verminderte Bauhöhe aufweist. So können lokale Unterschiede der im Batteriegehäuse vorgesehenen Hohlräume bei gleichzeitig optimalem Grad der Verpressung des Vlieses ausgeglichen werden.

Eine bevorzugte Ausführungsform des Absorptionselements ist dadurch gekennzeichnet, dass Abschnitte des Absorptionselements mit verminderter Bauhöhe, im unbelasteten Zustand die gleiche Dichte aufweisen wie Abschnitte des Absorptionselements mit unverminderter Bauhöhe. Dadurch wird erreicht, dass angepasst an die räumlichen Gegebenheiten im Batteriegehäuse (Sicken, Rippen, etc.) überall ein für eine bestimmte Zusammensetzung des Vlieses optimaler Grad der Verpressung gegeben ist.

In einer weiteren bevorzugten Ausführung weisen Abschnitte des Absorptionselementes mit verminderter Bauhöhe im unbelasteten Zustand die gleiche flächenbezogene Masse auf wie Abschnitte des Absorptionselementes mit unverminderter Bauhöhe. Diese eine höhere Dichte aufweisenden Abschnitte des Absorptionselementes werden beim Einbau in das Batteriesystem einer entsprechend angepassten Verpressung zwischen Batteriegehäuse und Batteriezellen unterzogen. Die eine höhere Dichte aufweisenden Abschnitte werden bevorzugt bereits bei der Herstellung des Absorptionselement gebildet, beispielsweise durch eine entsprechende mechanische und/oder thermische Vorbehandlung. Durch eine derartige Ausführung kann das Absorptionselement so geformt werden, dass dessen Positionierung in Sicken, Rippen und andere Versteifungseinrichtungen des Batteriegehäuses vereinfacht wird.

Bevorzugt ist das Absorptionselement zwischen dem Batteriegehäuse und den Batteriezellen elastisch verpresst angeordnet, wobei der Grad der Verpressung von 1 % bis 80%, insbesondere von 10% bis 50% beträgt. Die elastische Verpressung des Absorptionselementes bewirkt, dass das Absorptionselement im Batteriesystem ohne weitere Befestigungseinrichtungen sicher in einer gewünschten Position gehalten wird. Die konstruktive Formgebung eines oder mehrerer Absorptionselemente des Batteriesystems kann beispielsweise so erfolgen, dass die Absorptionselemente durch Ausformungen des Batteriegehäuses und/oder von weiteren Bauteilen in ihrer Position im Batteriegehäuse gehalten werden. Auch die Montage der Absorptionselemente wird dadurch wesentlich vereinfacht.

Ein zu hoher Grad an Verpressung begrenzt die Saugkapazität des Absorptionselementes und behindert die Verteilung von lokal austretendem flüssigem Temperiermittel über das gesamte im Inneren des Batteriegehäuses zur Verfügung stehende Vlies. Ein optimaler Wert für den Grad der Verpressung wird für eine bestimmte Zusammensetzung des Vlieses jeweils empirisch in Versuchen bestimmt und dann das Absorptionselement entsprechend dimensioniert.

Bevorzugt ist die Absorptionsfaser dazu eingerichtet, flüssiges Temperiermittel druckresistent zu binden. Dazu weist die Absorptionsfaser "absorbierende Elemente" auf. Unter "absorbierende Elemente" werden in diesem Zusammenhang Elemente verstanden, die dazu geeignet sind Flüssigkeit druckresistent zu binden. Die Bindung geschieht dabei nicht nur durch bloße Adhäsion, sondern beispielsweise durch eine Dipol-Ionen-Wechselwirkung zwischen Flüssigkeit und den "absorbierenden Elementen". Dies hat zur Folge, dass eine von den "absorbierenden Elementen" absorbierte Flüssigkeit unabhängig von der räumlichen Lage des Vlieses nicht mehr austritt. Herkömmliche saugfähige Materialen (Fasergewebe, etc.) können eine Flüssigkeit lediglich nichtdruckresistent binden. Beispielsweise würde bei einer gezielten Veränderung der räumlichen Lage eines saugfähigen Materials die zunächst aufgesogene Flüssigkeit zumindest teilweise wieder abgegeben werden.

Bevorzugt ist das Batteriesystem so ausgeführt, dass das Absorptionselement zumindest abschnittsweise direkt am Batteriegehäuse anliegt. Durch die zumindest abschnittsweise Anordnung des Absorptionselementes direkt am Batteriegehäuse, also an der Innenwand des Batteriegehäuses, entsteht einerseits der für die elastische Verpressung erforderliche Druck, andererseits wird dadurch sichergestellt, dass bei Undichtigkeiten austretendes flüssiges Temperiermedium, das sich in Vertiefungen beispielsweise zwischen Sicken und/oder Rippen ansammelt, sicher absorbiert werden kann.

Durch die vorgeschlagenen Ausführungsformen und Maßnahmen wird die Betriebssicherheit von Batteriesystemen erhöht.

### Kurzbeschreibung der Zeichnungen

Die Erfindung wird im Folgenden beispielhaft unter Bezugnahme auf die Zeichnungen beschrieben.
- Fig. 1: ist eine schematische Schnittdarstellung eines erfindungsgemäßen Batteriesystems mit einem Absorptionselement am Boden des Batteriegehäuses.
- Fig. 2: ist eine schematische Schnittdarstellung eines erfindungsgemäßen Batteriesystems mit zwei Absorptionselementen und Sicken/Rippen im Batteriegehause.

### Detaillierte Beschreibung der Erfindung

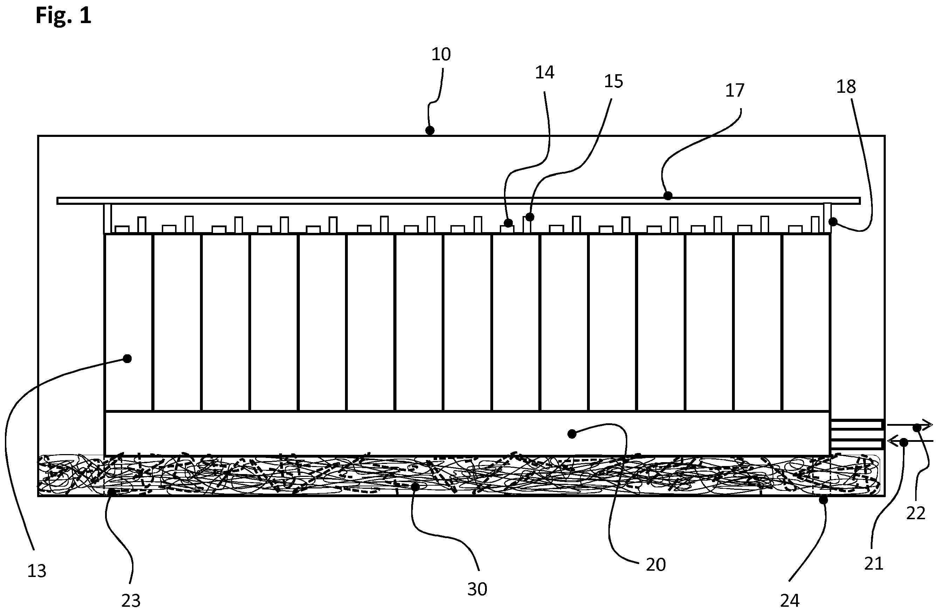

In der in Figur 1 gezeigten, beispielhaften Ausführungsform umfasst ein Batteriesystem mehrere Batteriezellen 13, wobei jede Batteriezelle Zellpole 14,15 aufweist. Eine Zellüberwachungseinheit 17 ist im Bereich der Zellpole 14,15 auf Distanzhaltern 18 so angeordnet, dass sie die mehreren Batteriezellen überspannt. Die Zellüberwachungseinheit kann Einrichtungen zur Überwachung der Zellspannungen und/oder der Temperatur einzelner Batteriezellen aufweisen (z. B. Spannungsabgriffelemente und/oder Temperatursensoren, die in der schematischen Darstellung nicht gezeigt sind). Die Batteriezellen sind über (nicht gezeigte) Zellverbinder miteinander verbunden. Ein Temperierblock 20 weist eine Zulauföffnung 21 und eine Auslassöffnung 22 auf und wird über die Zulauföffnung 21 und die Auslassöffnung 22 von einem durch eine externe Einrichtung temperierten flüssigen Temperiermittel durchströmt. Die Batteriezellen sind auf dem Temperierblock 20 so angeordnet, dass der Temperierblock als Wärmetauscher zwischen Batteriezellen und dem flüssigen Temperiermittel wirkt. Der Temperierblock 20 ist über Trägerelemente 23,24 mit dem Batteriegehäuse 10 fest verbunden. Am Boden des Batteriegehäuses 10 ist zwischen dem Batteriegehäuse 10 und dem Temperierblock ein Absorptionselement 30 angeordnet, das dazu eingerichtet ist im Schadensfall aus dem Temperierkörper austretendes flüssiges Temperiermittel aufzusaugen und zu binden.

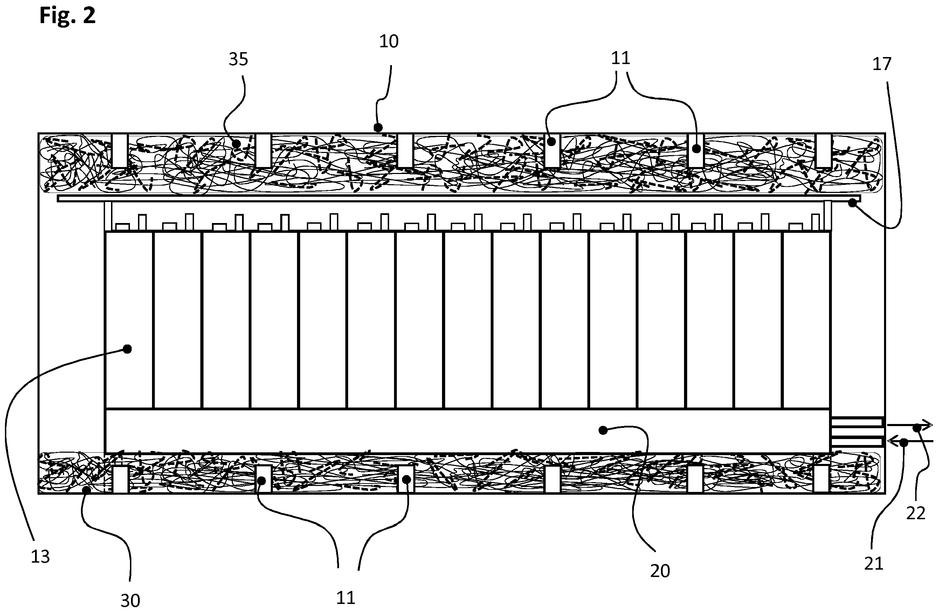

In Figur 2 ist beispielhaft ein Batteriesystem mit zwei Absorptionselementen (30,35) dargestellt. Wie in Fig. 1 wird der Temperierblock 20 über die Zulauföffnung 21 und die Auslassöffnung 22 von einem durch eine externe Einrichtung temperierten flüssigen Temperiermittel durchströmt. Das Batteriegehäuse weist zur mechanischen Verstärkung Versteifungselemente 11 (Sicken, Rippen, Stege, etc.) auf. Das im unteren Bereich des Batteriegehäuses angeordnete Absorptionselement 30 weist im Bereich der Versteifungselemente 11 eine verminderte Bauhöhe auf. Dadurch wird sichergestellt, dass sich an einer Stelle lokal austretendes flüssiges Temperiermittel über das untere Absorptionselement 30 verteilen kann und so die vorhandene Saugkapazität des unteren Absorptionselementes voll genutzt werden kann.

In einem oberen Bereich des Batteriesystems ist zwischen der Zellüberwachungseinheit 17 und der Innenwand des Batteriegehäuses 10 ein zweites Absorptionselement 35 angeordnet. Dadurch wird sichergestellt dass in einem Kraftfahrzeug, das bei einem Unfall auf dem Dach zu liegen kommt, eventuell austretendes flüssiges Temperiermittel sicher aufgesaugt wird. Entsprechende zusätzliche Absorptionselemente innen an den Seitenwänden des Batteriegehäuses und in anderen Hohlräumen im Inneren des Batteriegehäuses erhöhen die Sicherheit weiter.

Die beanspruchten Bereiche für flächenbezogene Masse und/oder Dichte wurden in Versuchsreihen mit unterschiedlichen Vlieszusammensetzungen empirisch ermittelt und geben eine durchschnittliche flächenbezogene Masse (oder Dichte) im unbelasteten Zustand (d.h. unbeladen mit Temperiermittel und unverpresst) an.

Ein erfindungsgemäßes Batteriesystem umfasst zumindest ein Batteriemodul. Ein Batteriemodul umfasst mehrere Batteriezellen (oder elektrochemische Speicherzellen). Falls das Batteriesystem mehr als ein Batteriemodul umfasst, kann entweder jedes Batteriemodul einen eigenen Temperierblock umfassen, oder alle Batteriemodule nutzen einen gemeinsamen Temperierblock. Üblicherweise umfasst jedes Batteriemodul auch eine Zellüberwachungseinheit, die in unmittelbarer Nähe zu den Zellpolen der Batteriezellen angeordnet ist.

### Bezugszeichenliste

- 10: Batteriegehäuse
- 11: Versteifungselemente (Sicken, Stege, Rippen)
- 13: Batteriezelle
- 14,15: Zellpole
- 17: Zellüberwachungseinheit
- 18: Distanzhalter
- 20: Temperierblock / Wärmetauscher
- 21: Zulauföffnung
- 22: Auslassöffnung
- 23,24: Trägerelemente
- 30: Erstes (Unteres) Absorptionselement
- 35: Zweites (Oberes) Absorptionselement

## Patentansprüche

1. Batteriesystem umfassend Batteriezellen (13), zumindest ein Absorptionselement (30,35) und ein Temperiersystem mit einem flüssigen Temperiermittel zur Kühlung und/oder Beheizung der Batteriezellen (13) in einem Batteriegehäuse (10),
**dadurch gekennzeichnet, dass**
das Absorptionselement (30,35) zur Aufnahme des flüssigen Temperiermittels zwischen den Batteriezellen (13) und dem Batteriegehäuse (10) angeordnet ist, wobei das Absorptionselement (30,35) ein Vlies ist, wobei das Vlies eine durchschnittliche flächenbezogene Masse von 250 bis 700 g/m² aufweist und Fasern von zumindest zwei unterschiedlichen Fasertypen umfasst, wobei zumindest einer der Fasertypen eine Stützfaser ist und zumindest ein weiterer der Fasertypen eine Absorptionsfaser ist und im Absorptionselement (30,35) der Gewichtsanteil der Stützfaser zwischen 1% und 40% und der Gewichtsanteil der Absorptionsfaser zwischen 60% und 99% liegt.

2. Batteriesystem nach Anspruch 1, **dadurch gekennzeichnet, dass** das Vlies eine durchschnittliche flächenbezogene Masse von 300 bis 450 g/m² aufweist.

3. Batteriesystem nach einem der vorhergehenden Ansprüche, **dadurch gekennzeichnet, dass** im Absorptionselement (30,35) der Gewichtsanteil der Stützfaser zwischen 2% und 30% und der Gewichtsanteil der Absorptionsfaser zwischen 70% und 98% liegt.

4. Batteriesystem nach einem der vorhergehenden Ansprüche, **dadurch gekennzeichnet, dass** das Absorptionselement (30,35) im unbelasteten Zustand eine Bauhöhe von 3 mm bis 40 mm aufweist.

5. Batteriesystem nach einem der vorhergehenden Ansprüche, **dadurch gekennzeichnet, dass** das Absorptionselement (30,35) im unbelasteten Zustand eine Bauhöhe von 3 mm bis 10 mm aufweist.

6. Batteriesystem nach einem der vorhergehenden Ansprüche, **dadurch gekennzeichnet, dass** das Absorptionselement (30,35) abschnittsweise eine verminderte Bauhöhe aufweist.

7. Batteriesystem nach Anspruch 6, **dadurch gekennzeichnet, dass** Abschnitte des Absorptionselements (30,35) mit verminderter Bauhöhe im unbelasteten Zustand die gleiche Dichte aufweisen wie Abschnitte des Absorptionselements (30,35) mit unverminderter Bauhöhe.

8. Batteriesystem nach Anspruch 6, **dadurch gekennzeichnet, dass** Abschnitte des Absorptionselements (30,35) mit verminderter Bauhöhe im unbelasteten Zustand die gleiche flächenbezogene Masse aufweisen wie Abschnitte des Absorptionselements (30,35) mit unverminderter Bauhöhe.

9. Batteriesystem nach einem der vorhergehenden Ansprüche, **dadurch gekennzeichnet, dass** das Absorptionselement (30,35) zwischen dem Batteriegehäuse (10) und den Batteriezellen (13) elastisch verpresst angeordnet ist, wobei der Grad der Verpressung von 1% bis 80%, insbesondere von 10% bis 50% beträgt.

10. Batteriesystem nach einem der vorhergehenden Ansprüche, **dadurch gekennzeichnet, dass** die Absorptionsfaser dazu eingerichtet ist, flüssiges Temperiermittel druckresistent zu binden.

11. Batteriesystem nach einem der vorhergehenden Ansprüche, **dadurch gekennzeichnet, dass** das Absorptionselement (30,35) zumindest abschnittsweise direkt am Batteriegehäuse anliegt.

12. Kraftfahrzeug, umfassend ein Batteriesystem nach einem der vorhergehenden Ansprüche.

## Claims

1. Battery system comprising battery cells (13), at least one absorption element (30,35) and a temperature-control system having a liquid temperature-control medium for cooling and/or heating the battery cells (13) in a battery housing (10),
**characterised in that**
the absorption element (30,35) for absorption of the liquid temperature-control medium is arranged between the battery cells (13) and the battery housing (10), the absorption element (30,35) being a non-woven material, the non-woven material having an average area-related mass of 250 to 700 g/m² and fibres of at least two different fibre types, at least one of the fibre types being a supporting fibre and at least one other of the fibre types being an absorption fibre and in the absorption element (30,35) the weight proportion of the supporting fibre lies between 1% and 40% and the weight proportion of the absorption fibre lies between 60% and 99%.

2. Battery system according to claim 1, **characterised in that** the non-woven material has an average area-related mass of 300 to 450 g/m².

3. Battery system according to one of the preceding claims, **characterised in that** in the absorption element (30,35) the weight proportion of the supporting fibre lies between 2% and 30% and the weight proportion of the absorption fibre lies between 70% and 98%.

4. Battery system according to one of the preceding claims, **characterised in that** in the unloaded state, the absorption element (30,35) has an overall height of 3 mm to 40 mm.

5. Battery system according to one of the preceding claims, **characterised in that** in the unloaded state, the absorption element (30,35) has an overall height of 3 mm to 10 mm.

6. Battery system according to one of the preceding claims, **characterised in that** the absorption element (30,35) has a reduced overall height in sections.

7. Battery system according to claim 6, **characterised in that** sections of the absorption element (30,35) with reduced overall height in the unloaded state have the same density as sections of the absorption element (30,35) with a non-reduced overall height.

8. Battery system according to claim 6, **characterised in that** sections of the absorption element (30,35) with reduced overall height in the unloaded state have the same area-related mass as sections of the absorption element (30,35) with non-reduced overall height.

9. Battery system according to one of the preceding claims, **characterised in that** the absorption element (30,35) is arranged in an elastically pressed manner between the battery housing (10) and the battery cells (13), the degree of pressing being from 1% to 80%, in particular from 10% to 50%.

10. Battery system according to one of the preceding claims, **characterised in that** the absorption fibre is configured to bind liquid temperature-control medium in a pressure-resistant manner.

11. Battery system according to one of the preceding claims, **characterised in that** the absorption element (30,35) directly abuts against the battery housing at least in sections.

12. Motor vehicle, comprising a battery system according to one of the preceding claims.

## Revendications

1. Système de batterie comprenant des éléments de batterie (13), au moins un élément d'absorption (30, 35) et un système de thermorégulation comportant un moyen de thermorégulation liquide permettant le refroidissement et/ou le chauffage des éléments de batterie (13) dans un boîtier de batterie (10),
**caractérisé en ce que** :
l'élément d'adsorption (30, 35) destiné à recevoir le moyen de thermorégulation liquide est agencé entre les éléments de batterie (13) et le boîtier de batterie (10), l'élément d'adsorption (30, 35) étant un non-tissé, dans lequel le non-tissé présente une masse surfacique moyenne de 250 à 700 g/m² et comporte des fibres d'au moins deux types différents, au moins l'un des types de fibre étant une fibre de support et au moins un autre type de fibre étant une fibre d'absorption et, dans l'élément d'absorption (30, 35), la part en poids des fibres de support étant comprise entre 1 % et 40 % et la part en poids des fibres d'absorption étant comprise entre 60 % et 99 %.

2. Système de batterie selon la revendication 1, **caractérisé en ce que** le non-tissé présente une masse surfacique moyenne de 300 à 450 g/m².

3. Système de batterie selon l'une quelconque des revendications précédentes, **caractérisé en ce que**, dans l'élément d'absorption (30, 35), la part en poids des fibres de support est comprise entre 2 % et 30 % et la part en poids des fibres d'absorption est comprise entre 70 % et 98 %.

4. Système de batterie selon l'une quelconque des revendications précédentes, **caractérisé en ce que** l'élément d'absorption (30, 35) présente, dans l'état sans charge, une hauteur de construction de 3 mm à 40 mm.

5. Système de batterie selon l'une quelconque des revendications précédentes, **caractérisé en ce que** l'élément d'absorption (30, 35) présente, dans l'état sans charge, une hauteur de construction de 3 mm à 10 mm.

6. Système de batterie selon l'une quelconque des revendications précédentes, **caractérisé en ce que** l'élément d'absorption (30, 35) présente sur certaines parties une hauteur de construction réduite.

7. Système de batterie selon la revendication 6, **caractérisé en ce que** des parties de l'élément d'absorption (30, 35) ayant une hauteur de construction réduite présentent, dans l'état sans charge, la même densité que les parties de l'élément d'absorption (30, 35) ayant une hauteur de construction non réduite.

8. Système de batterie selon la revendication 6, **caractérisé en ce que** des parties de l'élément d'absorption (30, 35) ayant une hauteur de construction réduite présentent, dans l'état sans charge, la même masse surfacique que celle des parties de l'élément d'absorption (30, 35) ayant une hauteur de construction non réduite.

9. Système de batterie selon l'une quelconque des revendications précédentes, **caractérisé en ce que** l'élément d'absorption (30, 35) est agencé de manière comprimée élastiquement entre le boîtier de batterie (10) et les éléments de batterie (13), dans lequel le degré de compression atteint de 1 % à 80 %, en particulier de 10 % à 50 %.

10. Système de batterie selon l'une quelconque des revendications précédentes, **caractérisé en ce que** la fibre d'absorption est conçue pour lier le moyen de thermorégulation liquide de manière résistante à la pression.

11. Système de batterie selon l'une quelconque des revendications précédentes, **caractérisé en ce que** l'élément d'absorption (30, 35) s'applique au moins en partie directement contre le boîtier de batterie.

12. Véhicule automobile, comprenant un système de batterie selon l'une quelconque des revendications précédentes.
